# EUROPEAN PATENT APPLICATION

(11) **EP 1 504 660 A1**
(43) Date of publication of application: **09.02.2005**
(21) Application number: 04012281.4
(22) Date of filing: 25.05.2004
(51) Int. Cl.: A01G 7/06

(54) **Enhancement in a device for injecting medicaments or nutrients into arboreal plants**

(30) Priority: 08.08.2003 IT PR20030009
(71) Applicant: Corradi, Bruno, I-43036 Fidenza (PARMA) (IT)
(72) Inventor: Corradi, Bruno, I-43036 Fidenza (PARMA) (IT)
(74) Representative: Gotra, Stefano

(57) **Abstract**

A device (1) for injecting medicaments or nutrients into arboreal plants, comprising at least one transport conduit (2) for the medicament, provided with at least one dispensing outlet (3). The device (1) originally comprises at least one cap (4) slidably inserted on the conduit (2), at the dispensing outlet (3) thereof, and so shaped as to be inserted in a hole drilled in a trunk of a plant. Said cap (4) has at least one opening (5) to allow the medicament or nutrient to flow out. The cap (4) has at least a portion that has substantially conical or cone frustum shape, which is inserted, in sealed fashion, into a hole drilled in a trunk of a plant.

## Description

The present invention relates to an enhancement in a device for injecting medicaments or nutrients into arboreal plants, of the type comprising at least one transport conduit for the medicament, provided with at least one dispensing outlet.

As is well known, plants are treated by means of chemical products of various natures, typically phytochemical substances, pesticides, fertilisers or the like, each of which performs a well specified function.

Said compounds are generally applied by spraying or by absorption directly from the roots of the plant. However, both these methods are possible sources of pollution for other plants present in the area where the treatment is performed.

To overcome said drawback, a method for treating plants was recently developed which consists of injecting medicament products under pressure directly into the lymphatic circulation system of the plant.

Currently, the state of the art provides for the injection under pressure to take place by means of a needle inserted sufficiently deep into the trunk of the plant; said needle is usually fastened to one end of a conduit for feeding the medicament product, conduit which in turn is connected to a source of pressure, typically a volumetric pump, which imposes a pressure that normally ranges between 2 and 8 atmospheres.

The needles used to said treatment have a portion that is so shaped as to be screwed into the trunk of the plant, in order to prevent the accidental extraction of the needle itself caused by the pressure whereat the medicament or nutrient is injected. In particular, said needles are screwed in depth inside the xylem of the plant, without eliminating the bark in the area of insertion of the needle.

The needles briefly described above, however, have some drawbacks.

A first drawback is that such needles, being screwed in depth in the xylem and requiring a significant entry hole, are very invasive and thus are not suitable to perform treatments on young plants or plants whose trunks have reduced diameters, such as vines.

A second drawback is the possible absorption, by the bark, of a medicament or nutrient which could spill from the xylem during the treatment. The substances used in the treatment need to be processed by the leaves before being absorbed by the cells of the bark through the lymph, since direct absorption would entail the inevitable damaging of the cells themselves.

In accordance with a second technique of the prior art, there are devices for injecting medicaments or nutrients into arboreal plants, constituted by a covering element so shaped as to be inserted, in sealed fashion, into a hole drilled in a trunk of a plant. Said coating element, typically cone frustum shaped, is internally hollow and defines a guide for a tubular body that is slidably inserted inside it.

The tubular body is so shaped as to transport the medicament product, dispensing it from an opening positioned on the tubular body itself, externally to the covering element or in correspondence with an outlet thereof.

This device is generally provided with a spacer that is coaxial to the tubular body and positioned between the tubular body itself and the covering element, in order to provide a seal and prevent the medicament from flowing back towards the interior of the device. Although the devices for injecting medicaments or nutrients into arboreal plants, described above, are effective and easy to manufacture, do have some important drawbacks.

First of all, the covering element which is inserted into a hole drilled in a trunk of a plant cannot be replaced after each application and this can compromise an optimal hygiene of the device, and it can also contribute to the transmission of determined infectious pathologies between two or more plants.

Secondly, the outlets of the covering element and of the tubular body have predetermined dimensions, no smaller than a minimum measurement. Therefore, with a same device it is not possible to treat arboreal plants whereon holes having very small diameter or holes of different diameter have been drilled.

Another drawback is that the aforementioned devices do not allow an adequate nebulisation of the medicaments inside the trunk of a plant.

An object of the present utility model is to eliminate the aforesaid drawbacks making available a device to inject medicaments or nutrients into arboreal plants, that is hygienic and can be employed in holes having any dimensions.

Another object of the present invention is to propose a device that is able to provide a seal on the hole, in order to prevent the accidental spillage of liquid that has already been injected into the trunk.

An additional object of the present invention is to provide a device for injecting medicaments or nutrients which can be used on plants of any age and having trunks of any diameter at all, such as vines.

A further object of the present invention is to provide a device that is practical to use, effective and economical.

Said objects are fully achieved by the device for injecting medicaments or nutrients into arboreal plants, of the present utility model, which is characterised by the content of the appended claims.

These and other objects shall become more readily apparent from the description that follows of a preferred embodiment illustrated, purely by way of non limiting example, in the accompanying drawing tables, in which:
- Figure 1 shows a section view of a device for injecting medicaments or nutrients according to the present invention;
- Figure 2 shows an exploded view of the device shown in Figure 1.

With reference to the figures, the device for injecting medicaments or nutrients in arboreal plants is globally designated by the number 1 and is preferably made of plastic material. The device 1 comprises a transport conduit 2 for the medicament, provided with a dispensing outlet 3, preferably oriented according to a longitudinal axis A of the conduit. In the illustrated example, the transport conduit 2 preferably has conical or cone frustum shape.

In new and original fashion, the device 1 comprises at least one cap 4 slidably inserted on the conduit 2, at the dispensing outlet 3 thereof, and so shaped as to be inserted in a hole drilled in a trunk of a plant.

The cap 4 has at least one opening 5 to allow the medicament or nutrient coming from the conduit 2 to flow out.

In the preferred embodiment, the opening 5 has a diameter that is preferably between about 0.5 millimetres and about 10 millimetres.

In particular, the embodiment having an opening of about 0.5 millimetres allows an effective nebulisation of the medicament, considerably improving its absorption by the plant.

In the preferred embodiment, the cap 4 has substantially conical or cone frustum shape, in order to be inserted, in sealed fashion, into a hole drilled in a trunk of a plant.

In particular, to improve the seal, the seal 4 is preferably made of a mechanical deformable material, for example plastic or Teflon, in such a way as to adapt itself to any superficial imperfections present on the peripheral walls of the hole.

The use of a deformable material, moreover, allows the cap 4 to be dilated by effect of the pressure whereat the medicament is injected by the conduit 2. This dilation allows the cap 4 to adhere with great effectiveness to the peripheral walls of the hole.

In the preferred and illustrated embodiment, the cap 4 is coupled by interference to the conduit 2 for transporting the medicament.

In accordance with an embodiment variant not shown herein, the device 1 is provided with a coating sleeve wound bout about the conduit 2 and the cap 4, in order to prevent accidental splashing of medicament during the injection.

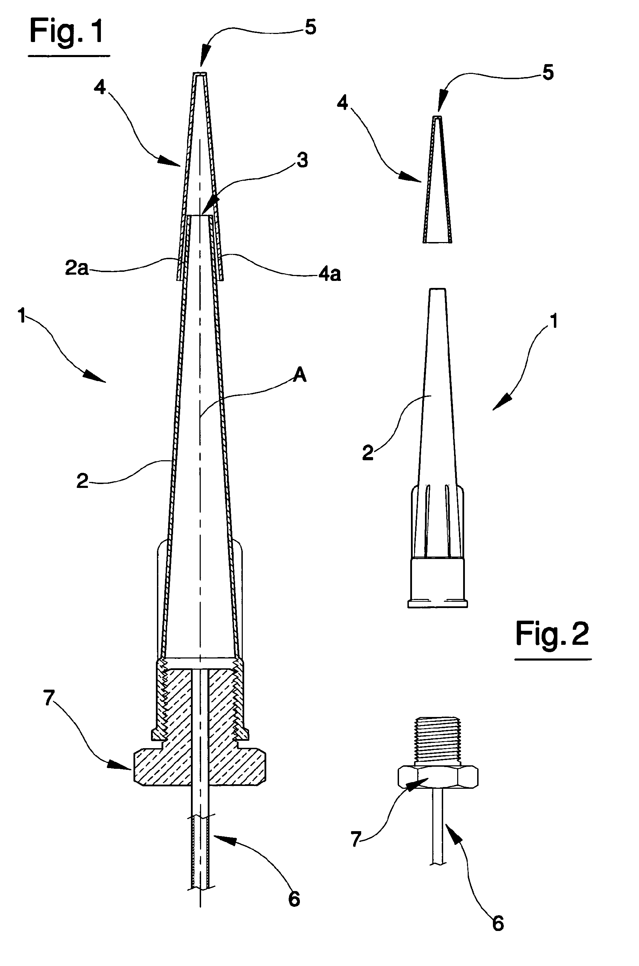

With particular reference to Figure 1, the inclination of a conical part 2a of the transport conduit 2 substantially coincides with that of a corresponding conical part 4a of the cap 4.

The medicament is drawn from a tank (not shown) and is fed to the transport conduit 2 by means of a flexible tube 6, fastened to one end of the conduit by means of a threaded bushing 7 which is screwed onto a corresponding thread obtained on lateral walls of the conduit 2.

The injection of the medicament or nutrient into a plant is achieved by drilling a hole in the trunk and inserting the device 1 into it.

The cone frustum shape of the cap 4 prevents the spillage of the product injected into the xylem of the plant, thereby preventing any damage to the bark cells, caused by the absorption of chemical substances not yet processed by the leaves.

The invention achieves important advantages.

Firstly, the cap 4, being easily separated from the conduit 2, can be cleaned and sterilised with ease, in such a way as to assure the utmost hygiene of the device 1, preventing the transmission of contagious pathologies between two plants which may be treated with the same device. In particular, given the low cost of the cap 4, it may even be of the disposable type.

Secondly, a cap made of mechanically deformable material is able to dilate by effect of the injection pressure of the medicament, effectively adhering to the lateral walls of the hole drilled in the trunk of a plant. Moreover, the deformability of the material allows to device 1 perfectly to follow the internal development of the hole, without sticking against the lateral walls thereof.

Another advantage is that a device according to the present invention is easy and rapid to use, since it does not require to be screwed into the bark. The cone frustum shaped cap 4 is able to provide a seal on the hole drilled in the trunk and to prevent the spillage of a medicament, thereby protecting the bark cells.

Advantageously, said device can be used on plants of every age and having trunks of any diameter whatsoever, thanks to the capability of using caps having outlets with different diameters, in particular up to about 0.5 millimetre.

In this latter case, moreover, the device achieves the important advantage of allowing an effective nebulisation of the medicament, considerably improving its absorption by the plant.

An additional advantage of the present invention is that it can be used on resinous plants, for instance on gymnosperms.

## Claims

1. A device (1) for injecting medicaments or nutrients into arboreal plants, comprising at least one transport conduit (2) for the medicament, provided with at least one dispensing outlet (3),
**characterised in that** it comprises at least one cap (4) slidably inserted on the conduit (2), in correspondence with a dispensing outlet (3) thereof and so shaped as to be inserted into a hole drilled in a trunk of a plant, said cap (4) having at least one opening (5) to allow the outflow of the medicament or nutrient.

2. Device as claimed in claim 1, **characterised in that** said cap (4) has at least one substantially conical or cone-frustum shaped portion which is inserted, providing a seal, into a hole drilled in a trunk of a plant.

3. Device as claimed in claim 1, **characterised in that** the cap (4) is made of mechanically deformable material, in order to adapt itself to the perimeter of the hole.

4. Device as claimed in claim 1, **characterised in that** said cap (4) is coupled by interference with the conduit (2) for transporting the medicament product.

5. Device as claimed in claim 1, **characterised in that** said opening (5) to allow the outflow of product from the cap (4) has a diameter between about 0.5 millimetres and about 10 millimetres.

6. Device as claimed in claim 1, **characterised in that** it comprises at least one coating sleeve wound both about the conduit (2) and the cap (4) to prevent accidental splashing of medicament.

7. Device as claimed in claim 2, **characterised in that** the conduit (2) for transporting the medicament has substantially conical or cone-frustum shape.

8. Device as claimed in claim 7, **characterised in that** the inclination of a conical part (2a) of the transport conduit (2) substantially coincides with that of a corresponding conical part (4a) of the cap (4).

9. An apparatus for treating arboreal plants, **characterised in that** it comprises at least one device as claimed in any of the previous claims.
